(19) **Europäisches Patentamt**
**European Patent Office**
**Office européen des brevets**

(11) **EP 1 775 875 A1**

(12) **EUROPEAN PATENT APPLICATION**
published in accordance with Art. 158(3) EPC

(43) Date of publication:
**18.04.2007 Bulletin 2007/16**

(21) Application number: **05758317.1**

(22) Date of filing: **08.07.2005**

(51) Int Cl.:
*H04L 9/08* (2006.01)    *H04J 15/00* (2006.01)
*H04Q 7/38* (2006.01)    *H04B 7/04* (2006.01)

(86) International application number:
**PCT/JP2005/012679**

(87) International publication number:
**WO 2006/013699 (09.02.2006 Gazette 2006/06)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **04.08.2004 JP 2004228659**

(71) Applicant: **MATSUSHITA ELECTRIC INDUSTRIAL CO., LTD.**
**Osaka 571-8501 (JP)**

(72) Inventors:
• **IMAI, Tomohiro**
  **Matsushita Electric Indust. Ltd**
  **Chuo-ku, Osaka 540-6319 (JP)**
• **YUDA, Yasuaki**
  **Matsushita Electric Indust. Ltd**
  **Chuo-ku, Osaka 540-6319 (JP)**

(74) Representative: **Grünecker, Kinkeldey,**
**Stockmair & Schwanhäusser**
**Anwaltssozietät**
**Maximilianstrasse 58**
**80538 München (DE)**

(54) **RADIO COMMUNICATION DEVICE, RADIO COMMUNICATION SYSTEM, AND RADIO COMMUNICATION METHOD**

(57)    There is disclosed a radio communication device capable of preventing wire-tap of an encrypted communication even if a radio signal is wire-tapped by a third person in a radio communication system using the MIMO technique. In this device, an inter-channel correlation calculation unit (104) calculates an inter-channel correlation value between two channels in the MIMO channel according to four channel estimation values inputted from a channel estimation unit (103). The six channel correlation values calculated are all inputted to a channel selection unit (105). The channel selection unit (105) selects a minimum channel correlation value from the six channel correlation values inputted from the inter-channel correlation calculation unit (104) and reports two channels corresponding to the selected channel correlation value to an inter-channel correlation monitoring unit (110) and inputs the channel estimation value of the two channels to a secret key generation unit (106).

FIG.3

**Description**

Technical Field

The present invention relates to a wireless communication system using a MIMO (Multiple Input Multiple Output) technique for receiving wireless signals transmitted from a plurality of antenna elements at a plurality of antenna elements and carrying out wireless communication, and a wireless communication apparatus and a wireless communication method used in this system.

Background Art

In recent years, a mobile communication technology has rapidly spread with the development of the information society, because of its convenience. In the mobile communication, wireless signals are comparatively easy to be intercepted by eavesdropper, and therefore, when individual information and confidential information for business are transmitted and received in the mobile communication, it is inevitable to prevent eavesdropping of wireless signals.
As a countermeasure for eavesdropping in the mobile communication, an encryption technique is typically used. Specifically, the encryption technique is well known where secret keys are individually generated at wireless communication apparatuses on a transmission side and a receiving side using a channel state information (CSI) in the mobile communication system (for example, refer to non-patent document 1). With the encryption technique disclosed in non-patent document 1, the wireless communication apparatuses on the transmission side and the receiving side individually estimate channel state information using the fact that the channel fluctuation is random, that channel correlation before and after the fluctuation drastically decreases even if it is slight fluctuation of the transmission and receiving position, and that radio waves have typically reversibility. By confidentially sharing information obtained from the measurement result and generating the same secret key, encrypted communication is implemented between the wireless communication apparatuses.
FIG.1 shows an outline of the technique disclosed in non-patent document 1. In FIG.1, a base station and mobile station alternately transmit and receive a pilot signal using a time division duplex (TDD) scheme for a short period, and individually estimate channel state information, and thereby share channel state information. Further, the base station and mobile station quantize the shared channel state information, and generate quantized data made up of two values of 0 and 1. Secret keys are then generated by selecting, combining, or repeating the generated quantized data using a predetermined scheme, or correcting errors as necessary. Further, the base station then carries out irreversible signal processing such as, for example, hash processing, on the generated secret key and transmits this hashed information to the mobile station. The mobile station confirms that the secret keys are the same by comparing the received hashed information and the generated hashed information, and then transmits the confirmation result, and vice versa. After this series of secret key generation steps, the base station and the mobile station start encrypted communication using the secret keys generated individually.
Non-patent document 1: Technical Report of IEICE, RCS2002-173, "A Scheme of Secret Key Agreement Based on the Random Fluctuation of Channel Characteristics in Land Mobile Radio", by Motoki Horiike, Hideichi Sasaoka.

Disclosure of Invention

Problems to be Solved by the Invention

However, with the technique disclosed in non-patent document 1, secret keys used in encrypted communication are generated based on channel state information. Therefore, when a pilot signal is intercepted by eavesdropper positioned at a location where the channel state information is close to that of the mobile station, there is a problem that eavesdropper can uniquely generate a secret key from the pilot signal and eavesdrop on encrypted communication between the base station and the mobile station.

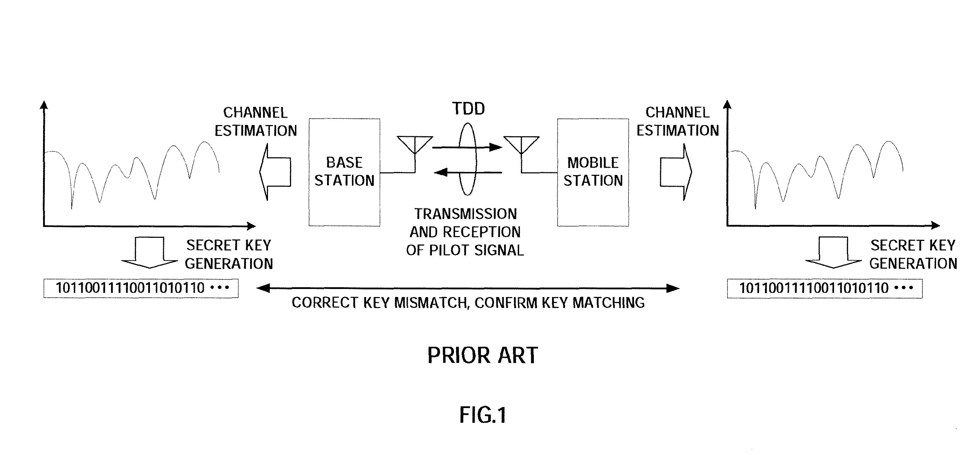

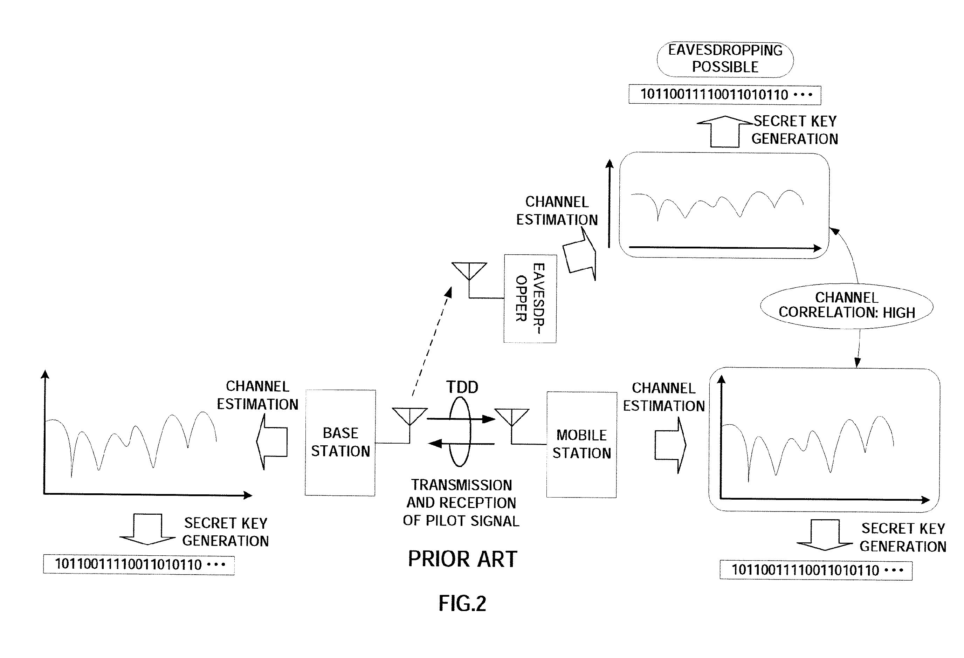

FIG.2 shows a situation where encrypted communication between the base station and mobile station in FIG. 1 is eavesdropped by an eavesdropper. In FIG.2, the eavesdropper is positioned at a location where the channel state information is close to that of the mobile station, and a pilot signal transmitted from the base station is confidentially intercepted by the eavesdropper. The channel estimation values calculated from the pilot signal intercepted by the eavesdropper have therefore high correlation with the channel estimation values calculated by the mobile station. Therefore, this eavesdropper can uniquely generate a secret key used in encrypted communication between the base station and the mobile station from the confidentially intercepted pilot signal. As a result, it is possible to eavesdrop on encrypted communication between the base station and the mobile station.
It is therefore an object of the present invention to provide a wireless communication apparatus and a wireless communication method capable of preventing eavesdropping on encrypted communication even if wireless signals are intercepted by eavesdropper in a wireless communication system using the MIMO technique.

Means for Solving the Problem

A wireless communication apparatus according to the present invention adopts a configuration having: a plurality of antennas that receive wireless signals on MIMO channels; a channel estimation section that calculates channel estimation values for the signals received by the antennas; an inter-channel correlation calculating section that calculates a channel correlation value between channels of the MIMO channels based on the calculated channel estimation values; a channel selection section that selects channels of the MIMO channels based on the calculated channel correlation value; and a key generating section that generates a secret key from the channel estimation values for the selected channels.

Advantageous Effect of the Invention

According to the present invention, channels of the MIMO channels are selected, and a secret key used in encrypted communication is generated from the channel estimation values for the selected channel, and therefore, even if wireless signals are intercepted by eavesdropper, eavesdropper does not know channel estimation values of which channels are selected, so that it is possible to prevent eavesdropping on encrypted communication by eavesdropper.

Brief Description of the Drawings

FIG.1 shows a situation for generating a secret key for encrypted communication in a conventional wireless communication system;
FIG.2 shows a situation where a secret key for encrypted communication is generated by an eavesdropper in the conventional wireless communication system;
FIG.3 is a block diagram showing a configuration of a base station provided with the wireless communication apparatus according to Embodiment 1;
FIG.4 is a block diagram showing the details of the configuration of part of the wireless communication apparatus according to Embodiment 1;
FIG.5 is a block diagram showing a configuration of a mobile station provided with the wireless communication apparatus according to Embodiment 1;
FIG.6 illustrates the operation of a wireless communication system according to Embodiment 1;
FIG. 7 shows a situation where a secret key is updated at the wireless communication system according to Embodiment 1;
FIG.8 is a block diagram showing a configuration of abase station provided with the wireless communication apparatus according to Embodiment 2;
FIG.9 illustrates the operation of a wireless communication system according to Embodiment 2;
FIG.10 illustrates the operation of a wireless communication system according to Embodiment 3;
FIG.11 is a block diagram showing a configuration of a base station provided with the wireless communication apparatus according to Embodiment 3;
FIG.12 is a block diagram showing a configuration of a mobile station provided with the wireless communication apparatus according to Embodiment 3; and
FIG.13 illustrates the operation of a wireless communication system according to Embodiment 3.

Best Mode for Carrying Out the Invention

Embodiments of the present invention will be described in detail below with reference to the accompanying drawings. In each of the embodiments described below, a case will be described as an example where a base station and a mobile station carry out encrypted communication in a mobile communication system of the TDD scheme using the MIMO technique.

(Embodiment 1)

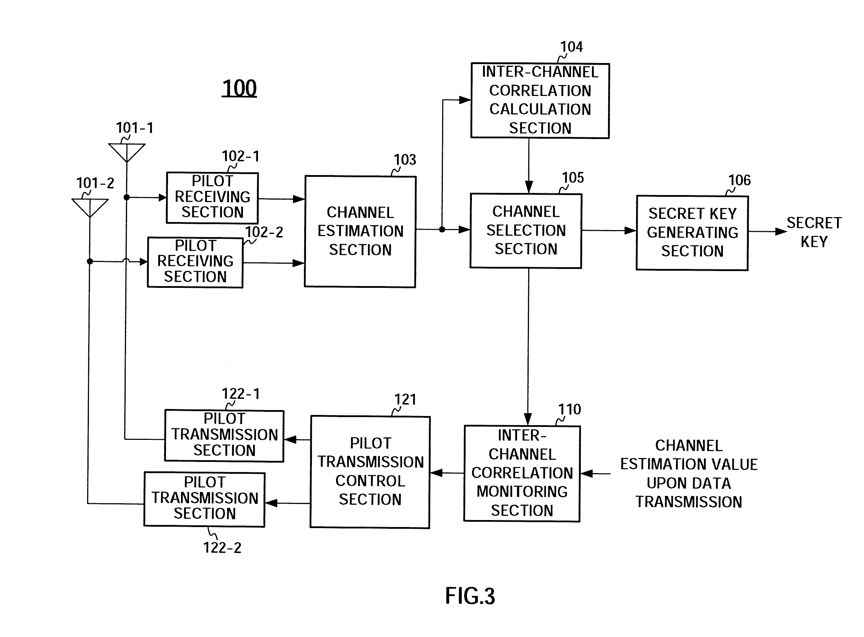

FIG.3 is a block diagram showing the configuration of the base station provided with wireless communication apparatus 100 according to Embodiment 1 of the present invention. Wireless communication apparatus 100 has two antenna elements 101-1 and 101-2, two pilot receiving sections 102-1 and 102-2, channel estimation section 103, inter-channel correlation calculation section 104, channel selection section 105, secret key generating section 106, inter-channel correlation monitoring section 110, pilot transmission control section 121 and two pilot transmission sections 122-1 and 122-2.

Antenna elements 101-1 and 101-2 acquire wireless signals on MIMO channels transmitted from the two antenna elements of a mobile station described later.

Pilot receiving sections 102-1 and 102-2 respectively have band pass filters, analog/digital converters and low noise amplifiers etc., extract a pilot signal from the signals received at antenna elements 101-1 and 101-2, carry out predetermined reception processing on the extracted pilot signal, and input the pilot signal after this processing to channel estimation section 103.

Channel estimation section 103 calculates channel estimation values for four channels of the MIMO channels based on the pilot signal inputted from pilot receiving sections 102-1 and 102-2, and inputs the calculated four channel estimation values to inter-channel correlation calculation section 104 and channel selection section 105.

Inter-channel correlation calculation section 104 calculates channel correlation values between two channels of the MIMO channels based on the four channel estimation values inputted from channel estimation section 103, and inputs the six calculated channel correlation values to channel selection section 105. The situation of calculating channel correlation values between the two channels of the MIMO channels will be described later.

Channel selection section 105 selects the smallest correlation value out of six channel correlation values inputted from inter-channel correlation calculation section 104, reports two channels corresponding to the selected channel correlation value to inter-channel correlation monitoring section 110, and inputs channel estimation values for the two channels to secret key generating section 106.

Secret key generating section 106 quantizes the two channel estimation values inputted from channel selection section 105, generates quantized data, and then generates a secret key by selecting, combining or repeating the generated quantized data using a predetermined scheme, or correcting errors as necessary, and inputs the generated secret key to a control section etc. (not shown).

Inter-channel correlation monitoring section 110 calculates a channel correlation value between two channels reported from channel selection section 105, from channel estimation values (measured based on a data signal which is received until the pilot signal is received again) upon transmission of data inputted from a control section etc. (not shown), and performs monitoring. When the channel estimation values during monitoring are greater than or equal to a predetermined threshold value, inter-channel correlation monitoring section 110 inputs a pilot control signal that instructs pilot transmission control section 121 to transmit a pilot signal.

When the pilot control signal is inputted from inter-channel correlation monitoring section 110, pilot transmission control section 121 immediately generates a pilot signal, and the generated pilot signal is inputted to pilot transmission sections 122-1 and 122-2, respectively.

Pilot transmission sections 122-1 and 122-2 respectively have band-pass filters, digital/analog converters and low noise amplifiers etc., and carry out predetermined transmission processing on the pilot signal inputted from pilot transmission control section 121. The pilot signal after processing is then radio transmitted to the mobile station via antenna elements 101-1 and 101-2 using the MIMO channels.

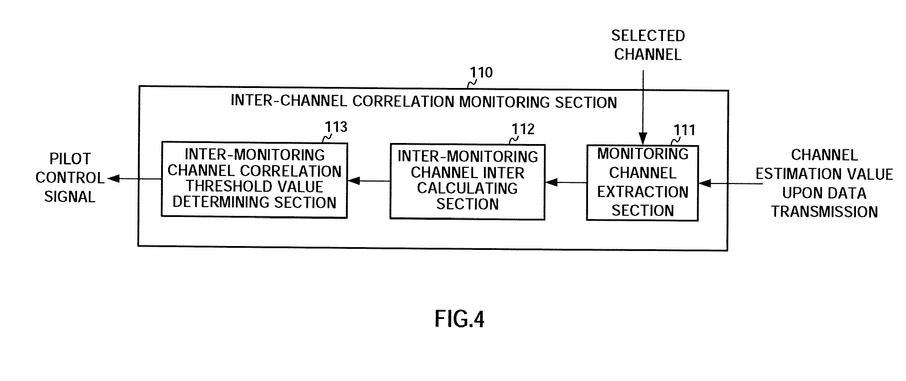

FIG.4 is a block diagram showing a detailed configuration of inter-channel correlation monitoring section 110. Inter-channel correlation monitoring section 110 has monitoring channel extraction section 111, inter-monitoring channel correlation calculating section 112 and inter-monitoring channel correlation threshold value determining section 113.

Monitoring channel extraction section 111 receives channel estimation values for four channels of the MIMO channels upon data transmission from a control section etc. (not shown), and continuously inputs only channel estimation values for the two channels reported from channel selection section 105 to inter-monitoring channel correlation calculating section 112. At wireless communication apparatus 100, in order to separate a data signal from the received signal upon data transmission after the start of encrypted communication, channel estimation is continuously carried out for all channels of the MIMO channels.

Inter-monitoring channel correlation calculating section 112 calculates a channel correlation value using a scheme described later from the two channel estimation values inputted from monitoring channel extraction section 111 and inputs the calculated channel correlation value to inter-monitoring channel correlation threshold value determining section 113.

Inter-monitoring channel correlation threshold value determining section 113 then monitors the channel correlation value inputted from inter-monitoring channel correlation calculating section 112, and, when the channel correlation value is greater than or equal to a predetermined threshold value, inputs a pilot control signal that gives an instruction to immediately generate and transmit a pilot signal to the mobile station, to pilot transmission control section 121.

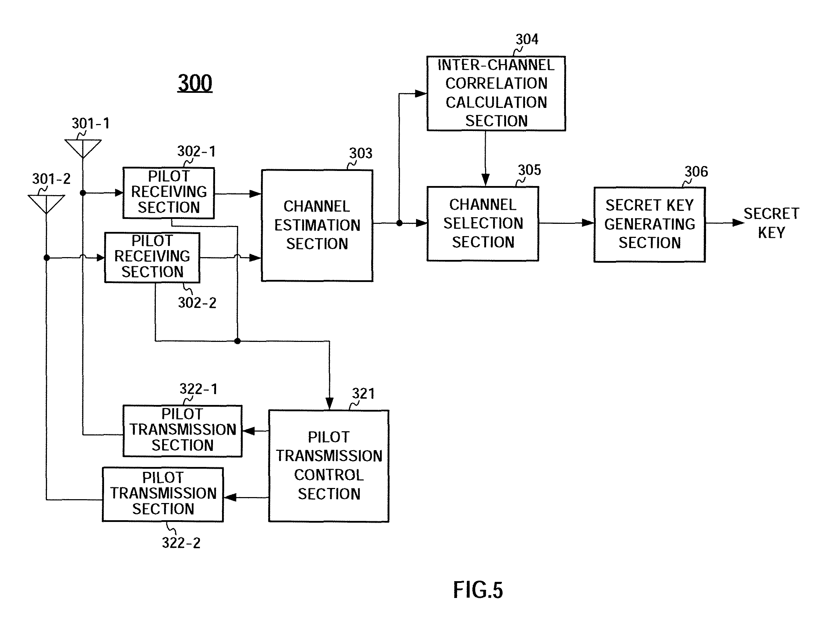

FIG.5 is a block diagram showing a configuration of a mobile station provided with wireless communication apparatus 300 according to this embodiment. Wireless communication apparatus 300 has two antenna elements 301-1 and 301-2, two pilot receiving sections 302-1 and 302-2, channel estimation section 303, inter-channel correlation calculation section 304, channel selection section 305, secret key generating section 306, pilot transmission control section 321 and two pilot transmission sections 322-1 and 322-2.

Antenna elements 301-1 and 301-2 acquire wireless signals of the MIMO channels transmitted from the two antenna elements 101-1 and 101-2 of the base station.

Pilot receiving sections 302-1 and 302-2 respectively have band pass filters, analog/digital converters and low noise amplifiers etc., extract a pilot signal from the signals received at antenna elements 301-1 and 301-2 and carry out predetermined reception processing on the extracted pilot signal. The pilot signal after processing is then inputted to channel estimation section 303 and pilot transmission control section 321.

Channel estimation section 303 calculates channel estimation values for four channels of the MIMO channels based on the pilot signal inputted from pilot receiving sections 302-1 and 302-2, and inputs the calculated four channel estimation values to inter-channel correlation calculation section 304 and channel selection section 305.

Inter-channel correlation calculation section 304 calculates channel correlation values between two channels based on four channel estimation values inputted from channel estimation section 303 and inputs the six calculated channel correlation values to channel selection section 305.

Channel selection section 305 selects the smallest correlation value out of the six channel correlation values inputted from inter-channel correlation calculation section 304, and inputs channel estimation values for two channels corresponding to the selected channel correlation value to secret key generating section 306.

Secret key generating section 306 quantizes the two channel estimation values inputted from channel selection section 305 to generate quantized data, and then generates a secret key by selecting, combining or repeating the generated quantized data using a predetermined scheme, or correcting errors as necessary. The generated secret key is then inputted to a control section etc. (not shown).

When the pilot signal is inputted from pilot receiving section 302, pilot transmission control section 321 immediately generates a pilot signal, and the generated pilot signal is inputted to pilot transmission sections 322-1 and 322-2, respectively.

Pilot transmission sections 322-1 and 322-2 respectively have band-pass filters, digital/analog converters, and low noise amplifiers etc., and carry out predetermined transmission processing on the pilot signal inputted from pilot transmission control section 321. The pilot signal after processing is then radio transmitted to the base station via antenna elements 301-1 and 301-2 using the MIMO channels.

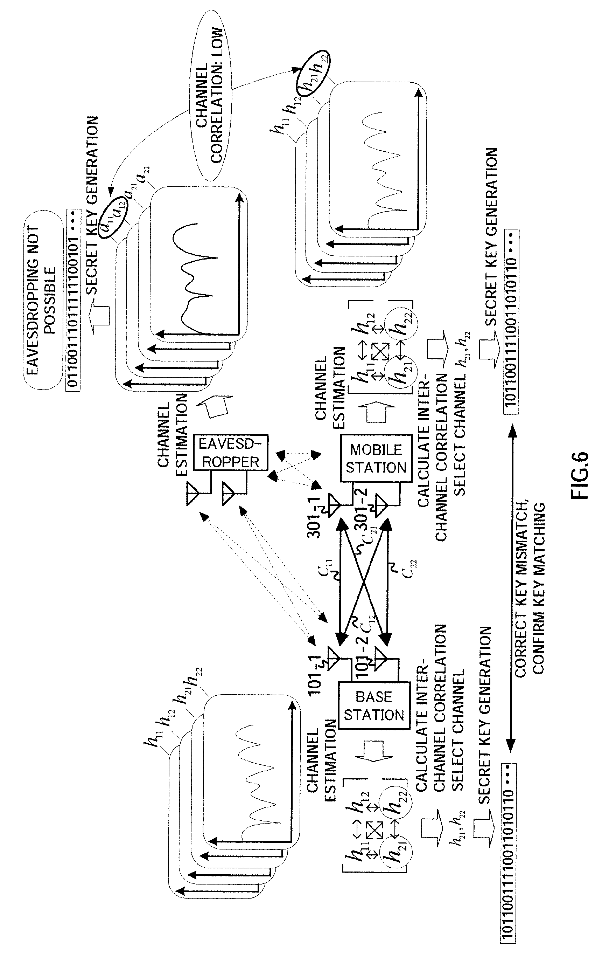

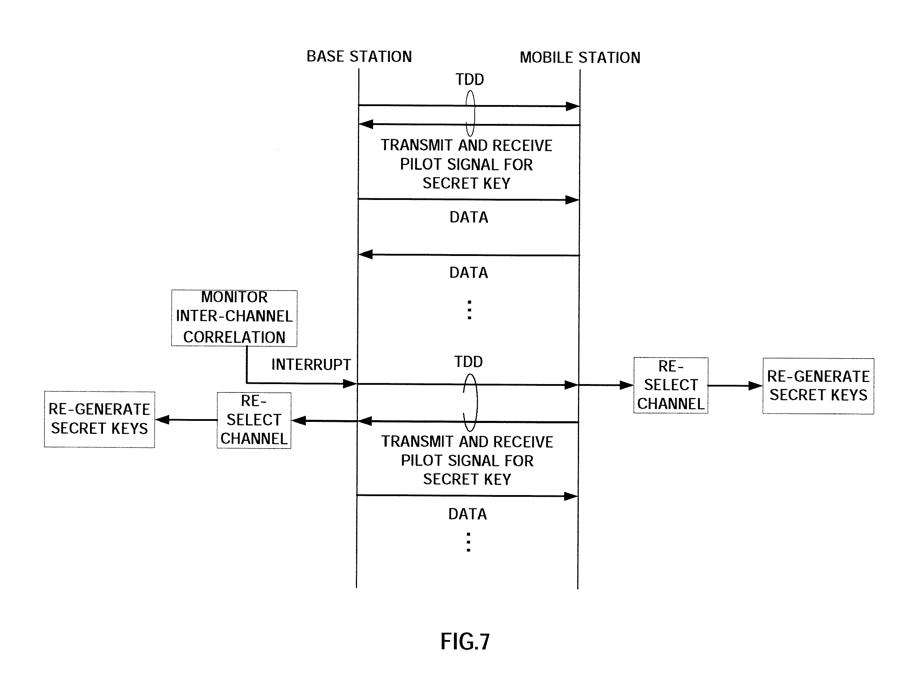

Next, the operation of the wireless communication system using the MIMO technique according to the present invention will be described using FIG.6 and FIG.7.

FIG.6 shows a situation where, in the wireless communication system using the MIMO technique, the base station and the mobile station carry out encrypted communication, and eavesdropper intercepts a wireless signal in the vicinity. In FIG.6, a channel formed between antenna element 101-1 of the base station and antenna element 301-1 of the mobile station is indicated as $C_{11}$. Further, a channel formed between antenna element 101-2 of the base station and antenna element 301-1 of the mobile station is indicated as $C_{21}$. Moreover, a channel formed between antenna element 101-1 of the base station and antenna element 301-2 of the mobile station is indicated as $C_{12}$. A channel formed between antenna element 101-2 of the base station and antenna element 301-2 of the mobile station is indicated as $C_{22}$.

Here, when the pilot signal is received from the base station, the mobile station immediately returns a pilot signal, so that channel estimation values for $C_{11}$ calculated by the base station and the mobile station can be regarded as substantially the same. Similarly, channel estimation values for channel $C_{21}$, $C_{12}$ and $C_{22}$ calculated by the base station and the mobile station can be regarded as substantially the same. Here, in FIG. 6, the channel estimation values for channel $C_{11}$ at the base station and the mobile station are both indicated as h11, the channel estimation value for channel $C_{21}$ is indicated as $h_{21}$, channel estimation value for channel $C_{12}$ is indicated as $h_{12}$, and channel estimation value for channel $C_{22}$ is indicated as $h_{22}$.

Inter-channel correlation calculation section 104 of the base station and inter-channel correlation calculation section 304 of the mobile station combine two out of four channel estimation values $h_{11}$, $h_{21}$, $h_{12}$ and $h_{22}$ in a round-robin system, calculate channel correlation values relating to a total of six combinations, and input the calculated six channel correlation values to channel selection section 105 and channel selection section 305.

Here, the situation will be described where six channel correlation values are calculated from four channel estimation values at inter-channel correlation calculation section 104 and inter-channel correlation calculation section 304. When channel matrix H of the MIMO channels with m rows and n columns is expressed in the following "equation 1", channel correlation values $\rho_{ij, xy}$ relating to a combination of arbitrary two channel estimation values $h_{ij}$ and $h_{xy}$ ($h_{ij} \neq h_{xy}$) can be expressed by the following "equation 2". Here, "m" in channel matrix H indicates the total number of antenna elements 101 of the base station, and "n" indicates the total number of antennal elements 301 of the mobile station, and therefore m = n = 2 in this embodiment. Further, E[ ] in equation 2 indicates an ensemble average.

$$\mathbf{H} = \begin{bmatrix} h_{11} & \Lambda & h_{1n} \\ \mathbf{M} & \mathbf{O} & \mathbf{M} \\ h_{m1} & \Lambda & h_{mn} \end{bmatrix} \Lambda(\ Equation\ 1\ )$$

$$\rho_{ij,xy} = \frac{E[h_{ij}^{*}h_{xy}]}{\sqrt{E[|h_{ij}|^{2}]}\sqrt{E[|h_{xy}|^{2}]}} \qquad \Lambda(\ Equation\ 2\ )$$

Channel selection section 105 or channel selection section 305 selects the smallest channel correlation value from the six channel correlation values, and inputs channel estimation values for two channels corresponding to the selected channel correlation value to secret key generating section 106 or secret key generating section 306. In FIG.6, channel correlation values $\rho_{21,\ 22}$ relating to the combination of channel estimation value $h_{21}$ and channel estimation value $h_{22}$ are a minimum, and therefore channel selection section 105 or channel selection section 305 inputs channel estimation value $h_{21}$ and channel estimation value $h_{22}$ into secret key generating section 106 or secret key generating section 306. When channel correlation value p is a minimum, it means that the difference in channel fluctuation between the two corresponding channels is a maximum. Further, in this embodiment, the selecting of channels, the selecting of channel estimation values, and the selecting of antenna elements 101 and 301 by channel selection section 105 or channel selection section 305 are mutually synonymous.

Secret key generating section 106 or secret key generating section 306 quantizes inputted channel estimation value $h_{21}$ and channel estimation value $h_{22}$, generates quantized data, and then generates a secret key of a predetermined data length by selecting, combining, or repeating the generated quantized data using a predetermined scheme, or correcting errors as necessary.

On the other hand, when the pilot signal radio transmitted by the base station and the mobile station is intercepted by eavesdropper positioned at a location where the channel state information is close to that of the mobile station, it is rare for channel estimation values calculated by eavesdropper to be the same as the channel estimation values calculated by the mobile station for all channels of the MIMO channels. In other words, in FIG.6, when the channel estimation value for channel $C_{21}$ calculated by eavesdropper is expressed by $a_{21}$, and the channel estimation value for channel $C_{22}$ is expressed by $a_{22}$, the probability that channel estimation values $h_{21}$ and $a_{21}$ become the same, and, at the same time, channel estimation values $h_{22}$ and $a_{22}$ become the same is extremely low. Further, two channel estimation values $h_{21}$ and $h_{22}$ are selected where channel correlation value p between the base station and the mobile station becomes a minimum--the difference in channel fluctuation becomes a maximum--, so that, even if eavesdropper selects two channel estimation values a using the same scheme as the base station and the mobile station, the possibility that eavesdropper will select channels completely different from the channels selected by the base station and the mobile station is high. Therefore, in the wireless communication system according to this embodiment, even if eavesdropper is positioned at a location where the channel state information is close to that of the mobile station, and intercepts the pilot signal of the MIMO channels from the base station and mobile station, it is extremely difficult to generate the same secret key as the secret key generated by the base station and mobile station, and it can be said to be impossible to eavesdrop on encrypted communication.

FIG.7 shows a situation in a time-series manner where a secret key used in encrypted communication is updated at the base station and mobile station. When the secret key is confidentially shared by the base station and mobile station by transmitting and receiving the pilot signal, encrypted communication starts immediately. Then, during encrypted communication, inter-channel correlation monitoring section 110 of the base station continuously monitors the channel correlation value between two channels selected upon generation of the secret key, and, when the channel correlation value of the monitoring target is greater than or equal to a predetermined threshold value, inputs a pilot control signal that instructs the mobile station to transmit the pilot signal, to pilot transmission control section 121. The base station and mobile station mutually transmit and receive the pilot signal again, calculate a total of four channel estimation values of the MIMO channels again, and select two channels where channel correlation value p becomes a minimum based on the recalculated channel estimation values, and thereby generate a secret key anew, that is, update the secret key.

In this way, according to this embodiment, channel selection section 105 of the base station or channel selection section 305 of the mobile station selects two channels of the MIMO channels, and secret key generating section 106 or secret key generating section 306 generates a secret key from channel estimation values for the selected channels, and therefore, even if a wireless signal is intercepted by eavesdropper, eavesdropper does not know which channel is selected, so that it is possible to prevent eavesdropping on encrypted communication by eavesdropper.

Further, according to this embodiment, the channel correlation value between the two selected channels is continuously monitored by inter-channel correlation monitoring section 110 when a secret key is generated, and, when the channel correlation value during monitoring is greater than or equal to a predetermined threshold value, the secret key is updated, so that it is possible to reliably prevent eavesdropping by eavesdropper.

Moreover, according to this embodiment, channel selection section 105 or channel selection section 305 selects two channels where the channel correlation value becomes a minimum, so that it is possible to further decrease the probability that eavesdropper that intercepts the wireless signal uniquely generates the secret key used in encrypted communication.

In this embodiment, the case has been described where the base station has inter-channel correlation monitoring section 110 and determines necessity of updating the secret key, but the present invention is by no means limited to this, and, for example, it is also possible to adopt a configuration where the mobile station is provided with wireless communication apparatus 100 shown in FIG.3, and the base station is provided with wireless communication apparatus 300 shown in FIG.5.

Further, in this embodiment, the case has been described where channel selection section 105 of the base station or channel selection section 305 of the mobile station selects two channel estimation values $h_{ij}$ and $h_{xy}$ where channel correlation value p becomes a minimum, but the present invention is by no means limited to this, and, for example, channel selection section 105 or channel selection section 305 may select channels in descending order of a signal to noise ratio (SNR).

Moreover, in this embodiment, the case has been described where channel selection section 105 or channel selection section 305 selects two channels of the MIMO channels, but the present invention is by no means limited to this, and, for example, the number of selected channels may increase or decrease every time channel selection section 105 or channel selection section 305 reselects channels.

(Embodiment 2)

In Embodiment 2 of the present invention, the base station and mobile station periodically update the secret key and maintain security of the secret key. In the following, only points differing from Embodiment 1 will be described to avoid duplication.

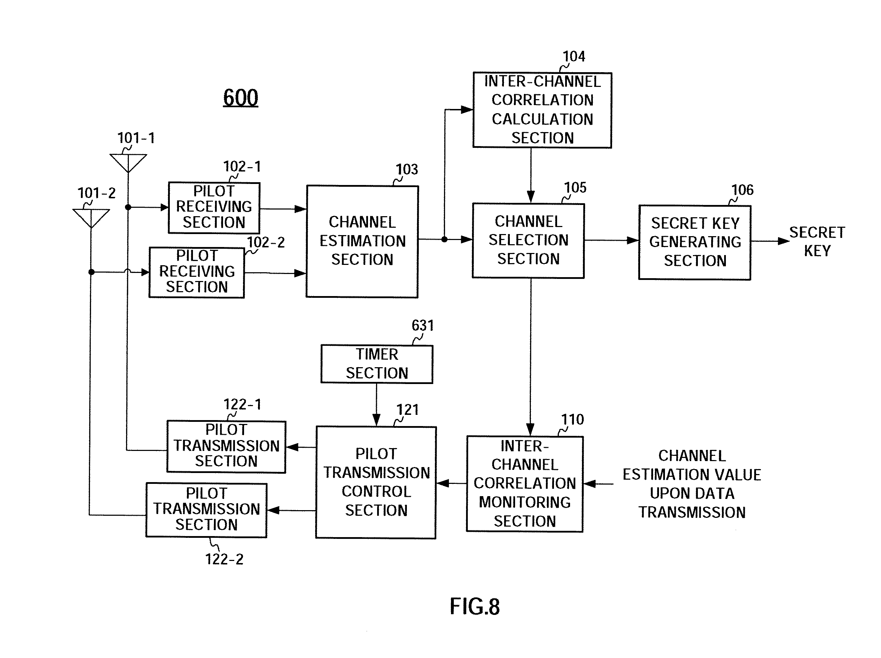

FIG.8 is a block diagram showing a configuration of a base station provided with wireless communication apparatus 600 according to this embodiment. Wireless communication apparatus 600 further has timer section 631 at wireless communication apparatus 100 of Embodiment 1.

Timer section 631 inputs a pilot control signal that gives an instruction to generate and transmit a pilot signal to the mobile station, to pilot transmission control section 121 at a predetermined cycle.

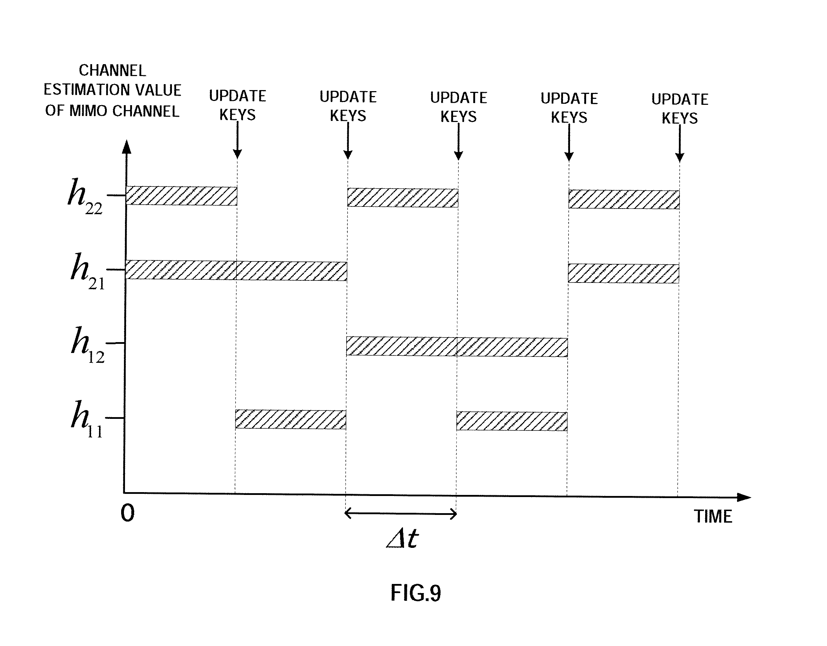

FIG.9 shows channel estimation value h selected by channel selection section 105 or channel selection section 305 in a time-series manner. As shown in FIG.9, at the base station and mobile station, at the beginning of the start of encrypted communication, channel estimation values $h_{22}$ and $h_{21}$ are selected, and a secret key is generated from channel estimation values $h_{22}$ and $h_{21}$. Continuing on, after elapsing $\Delta t$ , the pilot control signal is inputted from timer section 631 to pilot transmission control section 121, the base station and the mobile station transmit and receive the pilot signal, and thereby channel estimation values $h_{21}$ and $h_{11}$ are selected, and the secret key is updated. After this, every predetermined cycle $\Delta t$, the pilot control signal is inputted from timer 631 to pilot transmission control section 121, the base station and mobile station transmit and receive the pilot signal, and the secret key is updated.

In this way, according to this embodiment, the pilot control signal is inputted from timer section 631 to pilot transmission control section 121 at predetermined cycle $\Delta t$, and thereby the secret key is updated at the base station and the mobile station, so that, even if an identical secret key is fortuitously generated by eavesdropper while the secret key is used, it is possible to restore security of the encrypted communication.

In this embodiment, the case has been described where the pilot control signals are inputted to pilot transmission control section 121 from timer 631 and inter-channel correlation monitoring section 110 in parallel, but the present invention is by no means limited to this, and, for example, inter-channel correlation monitoring section 110 may be removed from wireless communication apparatus 600 so that pilot control signals are inputted to pilot transmission control section 121 only from timer 631.

(Embodiment 3)

In Embodiment 3 of the present invention, the base station having four antenna elements and the mobile station having three antenna elements switch between the antenna elements to use, and thereby a secret key is generated, and encrypted communication is carried out with increased variation of the channel estimation values. In the following, only points differing from Embodiment 1 will be described to avoid duplication.

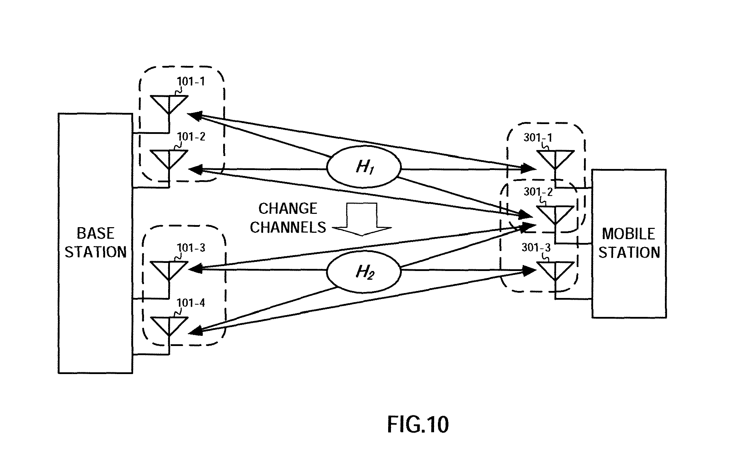

FIG.10 shows an outline of the operation of the wireless communication system according to this embodiment. In FIG.10, four antenna elements 101-1 to 101-4 of the base station are classified into a first group of antenna elements 101-1 and 101-2 and a second group of antenna elements 101-3 and 101-4. Further, three antenna elements 301-1 to 301-3 of the mobile station are classified into a first group of antenna elements 301-1 and 301-2 and a second group of antenna elements 301-2 and 301-3. In this embodiment, as shown in FIG.10, the base station and the mobile station switch between the antenna elements of the first group and the antenna elements of the second group and use the antenna elements alternately every time updating of the secret key is necessary.

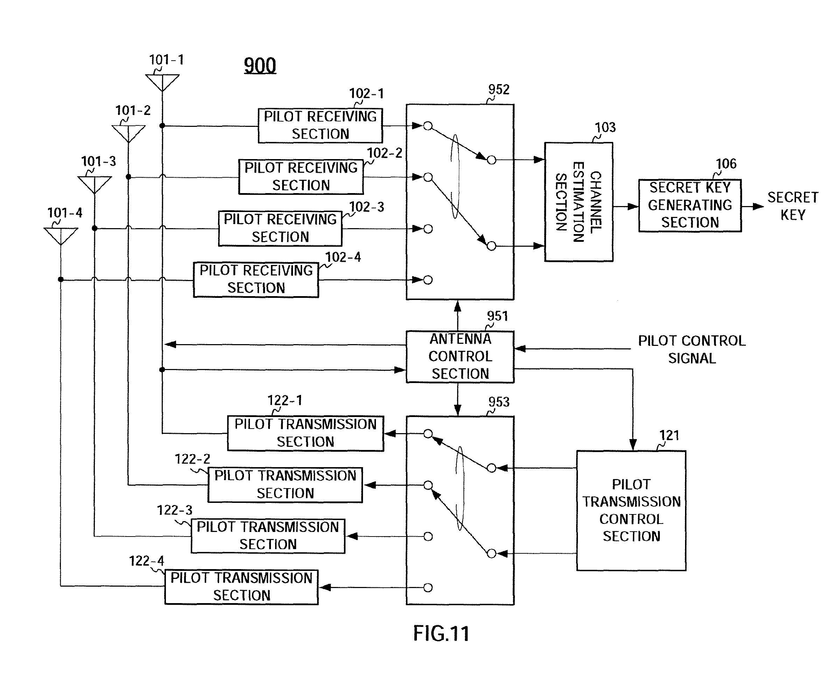

FIG.11 is a block diagram showing a configuration of wireless communication apparatus 900 provided with the base station of FIG.10. In FIG.11, components that have the same function as ones of wireless communication apparatus 100 according to Embodiment 1 will be assigned the same reference numerals as wireless communication apparatus 100 without further explanations.

Wireless communication apparatus 900 has four antenna elements 101-1 to 101-4, four pilot receiving sections 102-1 to 102-4, channel estimation section 103, secret key generating section 106, pilot transmission control section 121, four pilot transmission sections 122-1 to 121-4, antenna control section 951 and two switching sections 952 and 953.

When the pilot control signal is inputted from a control section etc. (not shown), antenna control section 951 generates an antenna switching request signal, and radio transmits the generated antenna switching request signal to the mobile station via antenna 101. Continuing on, after receiving a confirmation signal that is a response of the mobile station to this antenna switching request signal via antenna element 101, antenna control section 951 inputs an antenna control signal that gives an instruction to switch the group of antenna elements 101 transmitting and receiving the pilot signal, to switching sections 952 and 953.

When the antenna control signal is inputted from antenna control section 951, switching sections 952 and 953 switch the currently using group of antenna elements to the other group.

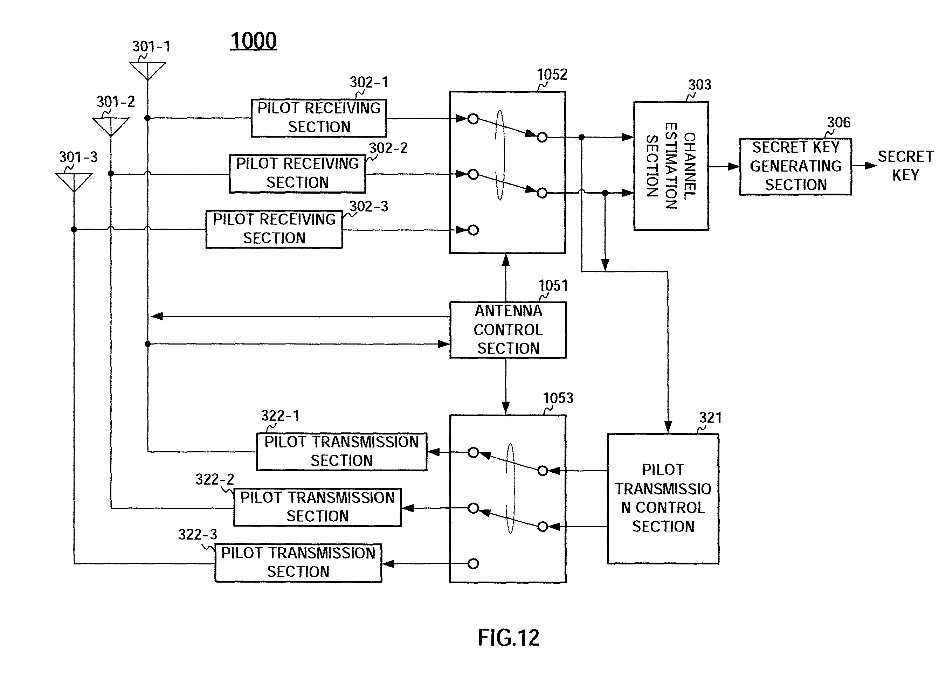

FIG.12 is a block diagram showing a configuration of wireless communication apparatus 1000 provided with the mobile station of FIG. 10. In FIG. 12, components that have the same function as ones of wireless communication apparatus 300 according to Embodiment 1 will be assigned the same reference numerals as wireless communication apparatus 300 without further explanations.

Wireless communication apparatus 1000 has three antenna elements 301-1 to 301-3, three pilot receiving sections 302-1 to 302-3, channel estimation section 303, secret key generating section 306, pilot transmission control section 321, three pilot transmission sections 322-1 to 322-3, antenna control section 1051 and two switching sections 1052 and 1053.

When the antenna switching request signal radio transmitted from wireless communication apparatus 900 is received via antenna element 301, antenna control section 1051 inputs an antenna control signal that gives an instruction to switch the group of antenna elements 301 transmitting and receiving the pilot signal, to switching sections 1052 and 1053. Antenna control section 1051 radio transmits a confirmation signal indicating the completion of switching of the group of antenna elements 301 at switching sections 1052 and 1053 to wireless communication apparatus 900 via antenna element 301.

When the antenna control signal is inputted from antenna control section 1051, switching sections 1052 and 1053 switch the currently using group of antenna elements to the other group.

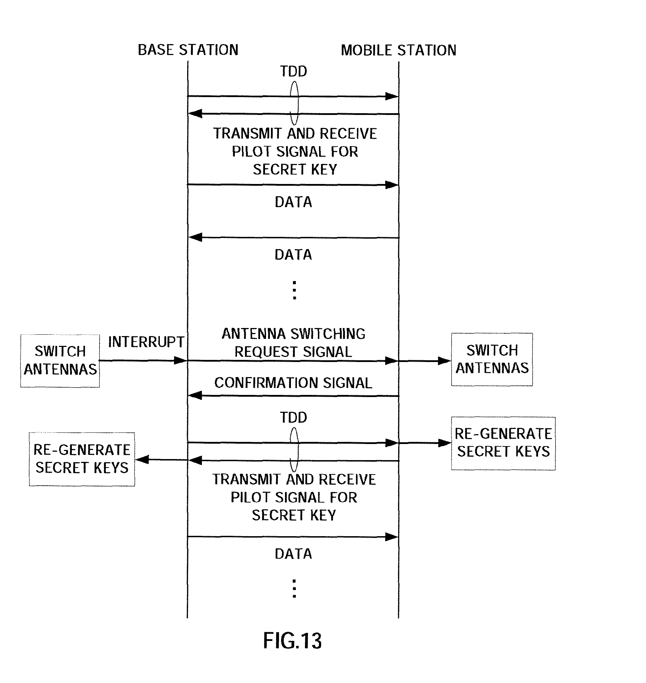

FIG.13 shows a situation in a time-series manner where, in the wireless communication system according to this embodiment, the base station and the mobile station switch the group of antenna elements used in encrypted communication.

As shown in FIG.13, when it is necessary to reselect a group of antenna elements, first, at the base station, an antenna switching request is generated by interrupting the encrypted communication. The base station then transmits this antenna switching request signal to the mobile station. When the antenna switching signal is received, the mobile station switches the currently using antenna group to the other group, and radio transmits a confirmation signal reporting that this switching is complete, to the base station.

According to this embodiment, antenna elements receiving the pilot signal are switched upon updating of the secret key, and therefore the calculated channel estimation values change before and after this updating, so that it is possible to restore security of the encrypted communication by updating the secret key even if the secret key used in the encrypted communication can be fortuitously generated by eavesdropper.

Further, according to this embodiment, it is only necessary to mechanically switch antenna elements receiving the pilot signal upon updating of the secret key, so that it is possible to reduce a load of signal processing at the base station and the mobile station.

Moreover, according to this embodiment, the number of antenna elements which are targets of channel estimation is fixed even if the base station and mobile station have three or more antenna elements, so that it is possible to reduce the number of calculation in the channel estimation and the overhead of the pilot signal.

In this embodiment, the case has been described where the groups of antenna elements at switching sections 952 and 953 of the base station and switching sections 1052 and 1053 of the mobile station are predetermined, but the present invention is by no means limited to this, and, for example, switching sections 952, 953, 1052 and 1053 may select antenna elements according to instructions of antenna control sections 951 and 1051, or randomly. Further, switching sections 952, 953, 1052 and 1053 may appropriately adjust the number of antenna elements to be selected. By this means, it is possible to increase the spread of channel estimation values and improve variation of the secret key.

In the above embodiments, the case has been described as an example where the present invention is implemented with hardware, the present invention can be implemented with software.

Furthermore, each function block used to explain the above-described embodiments is typically implemented as an LSI constituted by an integrated circuit. These may be individual chips or may partially or totally contained on a single chip. Here, each function block is described as an LSI, but this may also be referred to as "IC", "system LSI", "super LSI", "ultra LSI" depending on differing extents of integration.

Further, the method of circuit integration is not limited to LSI's, and implementation using dedicated circuitry or general purpose processors is also possible. After LSI manufacture, utilization of a programmable FPGA (Field Programmable Gate Array) or a reconfigurable processor in which connections and settings of circuit cells within an LSI can be reconfigured is also possible.

Further, if integrated circuit technology comes out to replace LSI's as a result of the development of semiconductor technology or a derivative other technology, it is naturally also possible to carry out function block integration using this technology. Application in biotechnology is also possible.

A first aspect of the present invention is a wireless communication apparatus having: a plurality of antennas that receive wireless signals on MIMO channels; a channel estimation section that calculates channel estimation values for the signals received by the antennas; an inter-channel correlation calculating section that calculates a channel correlation value between channels of the MIMO channels based on the calculated channel estimation values; a channel selection section that selects channels of the MIMO channels based on the calculated channel correlation value; and a key generating section that generates a secret key from the channel estimation values for the selected channels.

According to this configuration, channels of the MIMO channels are selected, and a secret key used in encrypted communication is generated from the channel estimation values for the selected channels, and therefore, even if wireless signal is intercepted by eavesdropper, eavesdropper does not know channel estimation values of which channels are selected, so that it is possible to prevent eavesdropping on encrypted communication by eavesdropper.

A second aspect of the present invention is a wireless communication apparatus further having an inter-channel correlation monitoring section that monitors the channel correlation value between the channels selected by the channel selection section, and, when the channel correlation value is greater than or equal to a predetermined threshold value during monitoring, makes the channel selection section select channels of the MIMO channels again based on the channel correlation value calculated by the inter-channel correlation calculating section.

According to this configuration, in addition to the above-described advantages, the channel correlation value between the selected channels is monitored, and, when the channel correlation value is greater than or equal to a predetermined threshold value during monitoring, channels of the MIMO channels are selected again, and the secret key is updated, so that it is possible to reliably prevent eavesdropping by eavesdropper.

A third aspect of the present invention is a wireless communication apparatus further having a timer section that makes the channel selection section periodically select channels of the MIMO channels again based on the channel correlation value calculated by the inter-channel correlation calculating section.

According to this configuration, in addition to the above-described advantages, the channel estimation values for channels of the MIMO channels are periodically selected, and the secret key is updated, so that, even if an identical secret key is fortuitously generated by eavesdropper while the secret key is used, it is possible to restore security of the encrypted communication.

A fourth aspect of the present invention is a wireless communication apparatus, wherein the channel selection section selects channels of the MIMO channels where the channel correlation value calculated by the inter-channel correlation calculating section becomes a minimum.

According to this configuration, in addition to the above-described advantages, the channel estimation values for channels of the MIMO channels where the channel correlation value becomes a minimum, are selected, so that it is possible to further decrease the probability that the secret key used in the encrypted communication is uniquely generated by eavesdropper intercepting a wireless signal.

A fifth aspect of the present invention is a wireless communication apparatus, wherein the channel selection section selects channels different from the channels of the MIMO channels selected the previous time.

According to this configuration, in addition to the above-described advantages, channels different from the channels of the MIMO channels selected the previous time are selected, so that, even if a secret key used in encrypted communication is fortuitously generated by eavesdropper, it is possible to restore security of the encrypted communication by updating the secret key.

A sixth aspect of the present invention is a wireless communication system having a plurality of the wireless communication apparatus according to the present invention.

According to this configuration, channels of the MIMO channels are selected, and a secret key used in encrypted communication is generated from the channel estimation values for the selected channels, and therefore, even if a wireless signal is intercepted by eavesdropper, eavesdropper does not know a channel estimation values of which channels are selected, so that it is possible to prevent eavesdropping on encrypted communication by eavesdropper.

A seventh aspect of the present invention is a wireless communication method having: a receiving step of receiving wireless signals on MIMO channels using a plurality of antennas; a channel estimation step of calculating channel estimation values for signals received by the antennas; an inter-channel correlation calculating step of calculating a channel correlation value between channels of the MIMO channels based on the calculatedchannelestimation values; achannelselection step of selecting channels of the MIMO channels based on the calculated channel correlation value; and a key generating step of generating a secret key from the channel estimation values for the selected channels.

According to this method, channels of the MIMO channels are selected, and a secret key used in encrypted communication is generated from the channel estimation values for the selected channels, and therefore, even if a wireless signal is intercepted by eavesdropper, eavesdropper does not know channel estimation values of which channels are selected, so that it is possible to prevent eavesdropping on encrypted communication by eavesdropper.

The present application is based on Japanese Patent Application NO.2004-228659, filed on August 4, 2004, entire content of which is expressly incorporated by reference herein. Industrial Applicability

A wireless communication apparatus and wireless communication method according to the present invention provide an advantage of preventing eavesdropping on encrypted communication even if a wireless signal is intercepted by eavesdropper, and is useful as a wireless communication system etc. using a MIMO technique.

**Claims**

1. A wireless communication apparatus comprising:

   a plurality of antennas that receive wireless signals on MIMO channels;
   a channel estimation section that calculates channel estimation values for the signals received by the antennas;
   an inter-channel correlation calculating section that calculates a channel correlation value between channels of the MIMO channels based on the calculated channel estimation values;
   a channel selection section that selects channels of the MIMO channels based on the calculated channel correlation value; and
   a key generating section that generates a secret key from the channel estimation values for the selected channels.

2. The wireless communication apparatus according to claim 1, further comprising an inter-channel correlation monitoring section that monitors the channel correlation value between the channels selected by the channel selection section, and, when the channel correlation value is greater than or equal to a predetermined threshold value during monitoring, makes the channel selection section select channels of the MIMO channels again based on the channel correlation value calculated by the inter-channel correlation calculating section.

3. The wireless communication apparatus according to claim 2, further comprising a timer section that makes the channel selection section periodically select channels of the MIMO channels again based on the channel correlation value calculated by the inter-channel correlation calculating section.

4. The wireless communication apparatus according to claim 1, wherein the channel selection section selects channels of the MIMO channels where the channel correlation value calculated by the inter-channel correlation calculating section becomes a minimum.

5. The wireless communication apparatus according to claim 1, wherein the channel selection section selects channels different from the channels of the MIMO channels selected the previous time.

6. A wireless communication system comprising a plurality of the wireless communication apparatus according to claim 1.

**7.** A wireless communication method comprising:

a receiving step of receiving wireless signals on MIMO channels using a plurality of antennas;
a channel estimation step of calculating channel estimation values for signals received by the antennas;
an inter-channel correlation calculating step of calculating a channel correlation value between channels of the MIMO channels based on the calculated channel estimation values;
a channel selection step of selecting channels of the MIMO channels based on the calculated channel correlation value; and
a key generating step of generating a secret key from the channel estimation values for the selected channels.

PRIOR ART

FIG.1

EP 1 775 875 A1

PRIOR ART

FIG.2

FIG.3

SELECTED
CHANNEL

110

INTER-CHANNEL CORRELATION MONITORING SECTION

113                          112                          111

PILOT
CONTROL
SIGNAL

| INTER-MONITORING CHANNEL CORRELATION THRESHOLD VALUE DETERMINING SECTION | INTER-MONITORING CHANNEL INTER CALCULATING SECTION | MONITORING CHANNEL EXTRACTION SECTION |

CHANNEL
ESTIMATION VALUE
UPON DATA
TRANSMISSION

FIG.4

EP 1 775 875 A1

FIG.5

FIG.6

FIG.7

FIG.8

600

SECRET KEY

SECRET KEY GENERATING SECTION — 106

INTER-CHANNEL CORRELATION CALCULATION SECTION — 104

CHANNEL SELECTION SECTION — 105

CHANNEL ESTIMATION SECTION — 103

INTER-CHANNEL CORRELATION MONITORING SECTION — 110

CHANNEL ESTIMATION VALUE UPON DATA TRANSMISSION

TIMER SECTION — 631

PILOT TRANSMISSION CONTROL SECTION — 121

PILOT RECEIVING SECTION — 102-1

PILOT RECEIVING SECTION — 102-2

PILOT TRANSMISSION SECTION — 122-1

PILOT TRANSMISSION SECTION — 122-2

101-1

101-2

FIG.9

FIG.10

FIG.11

900

- SECRET KEY
- 106 SECRET KEY GENERATING SECTION
- 103 CHANNEL ESTIMATION SECTION
- 952
- 951 ANTENNA CONTROL SECTION
- 953
- PILOT CONTROL SIGNAL
- 121 PILOT TRANSMISSION CONTROL SECTION
- 102-1 PILOT RECEIVING SECTION
- 102-2 PILOT RECEIVING SECTION
- 102-3 PILOT RECEIVING SECTION
- 102-4 PILOT RECEIVING SECTION
- 122-1 PILOT TRANSMISSION SECTION
- 122-2 PILOT TRANSMISSION SECTION
- 122-3 PILOT TRANSMISSION SECTION
- 122-4 PILOT TRANSMISSION SECTION
- 101-1
- 101-2
- 101-3
- 101-4

FIG.12

BASE STATION      MOBILE STATION

TDD

TRANSMIT AND RECEIVE PILOT SIGNAL FOR SECRET KEY

DATA

DATA

. .

SWITCH ANTENNAS

INTERRUPT

ANTENNA SWITCHING REQUEST SIGNAL

CONFIRMATION SIGNAL

SWITCH ANTENNAS

TDD

RE-GENERATE SECRET KEYS

TRANSMIT AND RECEIVE PILOT SIGNAL FOR SECRET KEY

RE-GENERATE SECRET KEYS

DATA

. .

FIG.13

**INTERNATIONAL SEARCH REPORT**

| International application No. |
|---|
| PCT/JP2005/012679 |

**A. CLASSIFICATION OF SUBJECT MATTER**
*H04L9/08* (2006.01), *H04J15/00* (2006.01), *H04Q7/38* (2006.01), *H04B7/04* (2006.01)

According to International Patent Classification (IPC) or to both national classification and IPC

**B. FIELDS SEARCHED**

Minimum documentation searched (classification system followed by classification symbols)
*H04L9/08* (2006.01), *H04J15/00* (2006.01), *H04Q7/38* (2006.01), *H04B7/04* (2006.01)

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 61-003542 A (Sony Corp.), 09 January, 1986 (09.01.86), Full text; Figs. 1 to 6 (Family: none) | 1-7 |
| A | John E. Hershey, Amer A. Hassan, and Rao Yarlagadda, "Unconventional Cryptographic Keying Variable Management", IEEE TRANSACTIONS ON COMMUNICATIONS, 1995.01, Vol.43, No.1, page 3 to 6 | 1-7 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 04 October, 2005 (04.10.05) | 01 November, 2005 (01.11.05) |

| Name and mailing address of the ISA/ | Authorized officer |
|---|---|
| Japanese Patent Office | |
| Facsimile No. | Telephone No. |

Form PCT/ISA/210 (second sheet) (April 2005)

## INTERNATIONAL SEARCH REPORT

| International application No. |
| --- |
| PCT/JP2005/012679 |

C (Continuation).   DOCUMENTS CONSIDERED TO BE RELEVANT

| Category* | Citation of document, with indication, where appropriate, of the relevant passages | Relevant to claim No. |
| --- | --- | --- |
| T,A | Yoshihiko OGAWA, Shuichi SASAOKA, Tomohiro IMAI, Yasuaki YUDA, Ken'ichi MIYOSHI, Koichi HONMA, "MIMO-OFDM System ni okeru Sokan Gyoretsu no Koyuchi Hendo ni Motozuku Himitsu Kagi Kyoyu Hoshiki no Kento", The Institute of Electronics, Information and Communication Engineers Gijutsu Kenkyu Hokoku RCS2004-236 to 258, The Institute of Electronics, Information and Communication Engineers, 19 January, 2005 (19.01.05), Vol.104, No.597, pages 127 to 132 | 1-7 |

Form PCT/ISA/210 (continuation of second sheet) (April 2005)

**EP 1 775 875 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004228659 A